# EUROPÄISCHE PATENTANMELDUNG

(11) **EP 1 742 008 A1**
(43) Veröffentlichungstag der Anmeldung: **10.01.2007**
(21) Anmeldenummer: 06010142.5
(22) Anmeldetag: 17.05.2006
(51) Int. Cl.: F41A 21/32, F16B 7/04, F16B 2/18

(54) **Vorrichtung zur Befestigung eines auf bzw. an einem Körper zu befestigenden Teils**

(30) Priorität: 08.07.2005 DE 102005031947
(71) Anmelder: Rheinmetall Waffe Munition GmbH, 40880 Ratingen (DE)
(72) Erfinder: Matzagg, Erich, 78727 Beffendorf (DE)
(74) Vertreter: Dietrich, Barbara

(57) **Zusammenfassung**

Die Erfindung betrifft eine Befestigung eines zu befestigenden Teils (1) auf bzw. an einem Körper (2, 2.1, wobei der Körper (2, 2.1) rund oder mehreckig, voll oder hohl sein kann. Insbesondere betrifft die Erfindung die Befestigung einer Mündungsbremse (1) an einem Waffenrohr. Es wird vorgeschlagen, eine Art Schnellbefestigung (3) vorzusehen, mit der das zu befestigende Teil (1) auf einem Körper (2, 2.1) fixiert und gehalten bzw. befestigt werden kann. Die Vorrichtung (3) besitzt im Wesentlichen dazu wenigstens zwei Hebel (4, 5) mit Schenkeln (4.1, 5.1), die am zu befestigenden Teil (1) gehalten, in einem definierten Bereich am Körper (2, 2.1) gegen diesen gedrückt werden können. Die Flächenpressung wird dabei durch einen beispielsweise kreisabschnittsförmigen Vorsprung (4.4, 5.4) am Hebel (4, 5) gewährleistet, der bei Verschwenkung der Schenkel (4.1, 5.1) um den eigenen Drehpunkt (D) mit dem Körper (2, 2.1) in Kontakt kommt. Zur Unterstützung der Befestigungskraft sind die Schenkel (4.1, 5.1) so gestaltet, dass sie eine Klammer um den Körper (2, 2.1) bilden.

## Beschreibung

Die Erfindung betrifft eine Befestigung eines zu befestigenden Teils auf bzw. an einem Körper, wobei der Körper rund oder mehreckig, voll oder hohl sein kann. Insbesondere betrifft die Erfindung die Befestigung einer Mündungsbremse an einem Waffenrohr.

Bezogen auf die Befestigung einer Mündungsbremse an ein Waffenrohr sind verschiedene Befestigungsformen bekannt.

Nach der DE 33 37 417 A1 wird ein Mündungsteil auf einem Waffenrohr aufgeschraubt. Auch in der DE 38 31 766 C2 und der DE 102 07 256 A1 erfolgt die Befestigung mittels Verschraubung.

Mit der DE 600 12 269 T2 wird eine gleichfalls aufschraubbare Vorrichtung zur Befestigung einer Mündungsbremse an einem Waffenlauf offenbart, die vorschlägt, wenigstens ein Mittel zum Stoppen der Drehbewegung der Bremse vorzusehen. Das Stopp-Mittel wird dabei wenigstens aus einer Druck-Schraube gebildet, die quer zwischen der Mündungsbremse und dem Rohr angeordnet ist. Vermieden werden soll mit dieser Vorrichtung der Nachteil, der bekanntlich bei Verschraubungen im Allgemeinen und im Gebrauch der der Mündungsbremse im Besonderen auftreten.

Eine weitere Befestigungsvorrichtung, hier für einen Mündungsspiegel, beschreibt die DE 699 08 861 T2. Hierbei wird, ausgehend von Befestigungsschellen oder einer Verschweißung als Stand der Technik, vorgeschlagen, eine Vorrichtung vorzusehen, welche aus wenigstens zwei Flanschen besteht, die das Waffenrohr umschließen und die miteinander durch Verbindungsmittel verbunden sind.

Die Erfindung stellt sich die Aufgabe, eine Befestigung aufzuzeigen, die auf eine Verschraubung verzichten kann.

Gelöst wird die Aufgabe durch die Merkmale des Patentanspruchs 1. Vorteilhafte Ausgestaltungen sind in den Unteransprüchen aufgeführt.

Der Erfindung liegt die Idee zugrunde, eine Art Schnell befestigung vorzusehen, mit der das zu befestigende Teil auf einem Körper, wie Rohr oder dergleichen, fixiert und gehalten werden kann, wobei die für die Funktion notwendige Haltekraft über eine Flächenpressung der Schnellbefestigung realisiert wird. Die Schnellbefestigung besitzt im Wesentlichen dazu wenigstens zwei Hebel mit Schenkeln, die am zu befestigenden Teil gehalten, in einem definierten Bereich am Körper gegen diesen gedrückt werden können. Die Flächenpressung wird dabei durch einen beispielsweise kreisabschnittsförmigen Vorsprung am Hebel gewährleistet, der bei Verschwenkung der Schenkel um den eigenen Drehpunkt mit dem Körper in Kontakt kommt. Zur Unterstützung der Befestigungskraft sind die Schenkel so gestaltet, dass sie eine Klammer um den Körper bilden, so dass vermieden wird, dass die Flächenpressung nachlassen könnte.

Für das Führen des zu befestigenden Teils über den Körper bis zum vorgesehenen Bereich der Befestigung sind die Schenkel offen, so dass eine Berührung mit dem Körper ausgeschlossen werden kann. Hat das zu befestigende Teil den Ort der Befestigung erreicht, werden die Schenkel verschwenkt, wobei die Vorsprünge der Schenkel gegen den Körper gedrückt werden.

In Weiterführung der Erfindung sind Nute am / im Körper vorgesehen, in die bzw. gegen die die Vorsprünge der Schenkel gedrückt werden.

Als ein weiterer Vorteil hat sich gezeigt, eine Führung in den Körper zu integrieren, wodurch das zu befestigende Teil leichter entlang der Führung in die Befestigungsposition gebracht werden kann.

Anhand eines Ausführungsbeispiels, hier einer Mündungsbremse als das zu befestigende Teil auf einem Waffenrohr, soll die Erfindung näher erläutert werden. Es zeigt:
- Fig. 1: eine Mündungsbremse mit einer Vorrichtung für eine Befestigung auf einem Körper,
- Fig. 2: eine Darstellung der Vorrichtung im Schnitt A-A aus Fig. 1 in den Stellungen "Offen" sowie "Geschlossen",
- Fig. 3: ein angedeutetes Waffenrohr in Schnittdarstellung,
- Fig. 4: einen Körper mit unterschiedlichen, in Draufsichtdarstellung erkennbaren Geometrien.

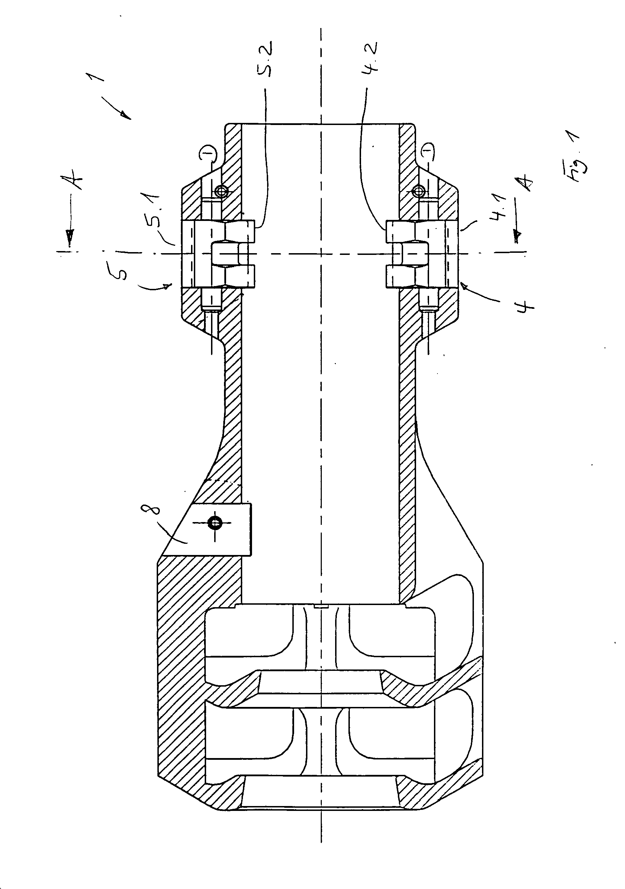

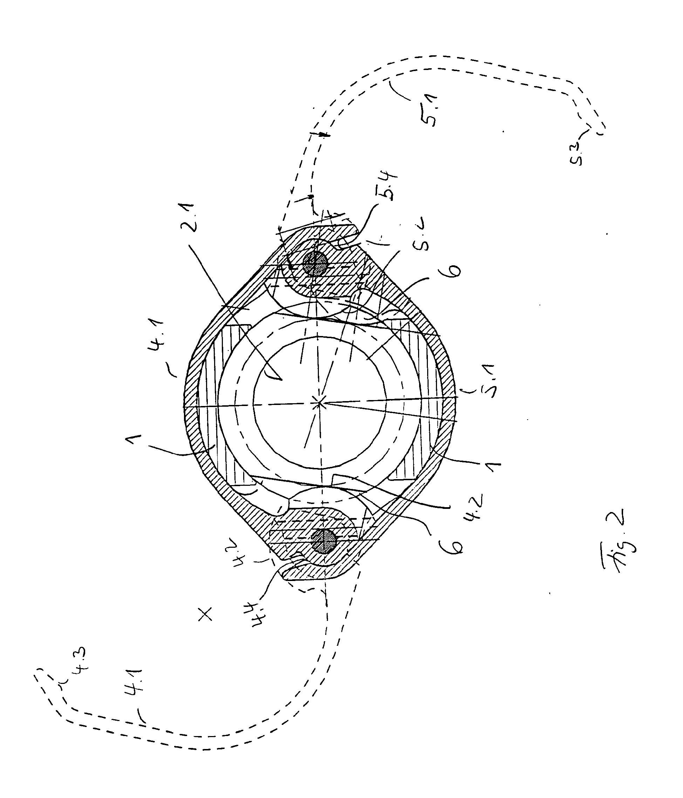

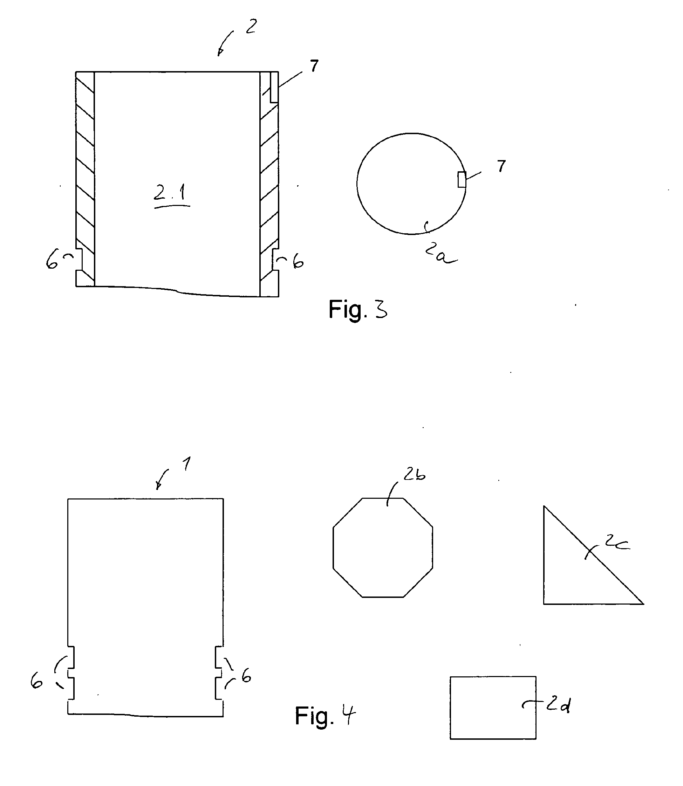

Fig. 1 zeigt eine Mündungsbremse 1, die an einem hier nicht näher dargestellten Körper 2 (Fig. 3), einem Waffenrohr 2.1, befestigbar ist. Die Befestigung erfolgt über eine Vorrichtung 3, die im Wesentlichen aus wenigstens zwei Hebeln 4, 5 mit Schenkeln 4.1, 5.1 besteht, die um einen Lager- bzw. Drehpunkt D beweg- bzw. verschwenkbar sind und in ihrer Funktion "Geschlossen" eine Klammer um das Waffenrohr 2.1 bilden, wie in Fig. 2 dargestellt. Die Hebel 4, 5 weisen um ihren Lagerpunkt D eine kreisabschnittsförmige Verlängerung als Vorsprung 4.2, 5.2 auf, denen sich konstruktiv die Schenkel 4.1, 5.1 anschließen. Am anderen Ende besitzen die Schenkel 4.1, 5.1 eine Art Nase oder Haken 4.3, 5.3. Mit diesen greifen die Hebel 4, 5 an eine, den kreisabschnittsförmigen Verlängerungen in etwa gegenüberliegenden Umfangsfläche 4.4, 5.4 des kooperierenden Hebels 5, 4 ein/an, wenn die Schenkel 4.1, 5.1 geschlossen werden / sind, und werden so verrastet.

Zur Führung der Mündungsbremse 1 entlang des Waffenrohres 2.1 als auch zur ausreichenden Zentrierung bzw. Ausrichtung der Mündungsbremse 1 gegenüber dem Rohr 2.1 selbst ist in vorteilhafter Weise eine Führung 7 im / am Rohr 2.1 vorgesehen, die mit einem Führungsstift 8 der Mündungsbremse 1 funktional zusammen wirkt.

In einer weiteren bevorzugten Ausführung weist das Rohr 2.1 bzw. der Körper 2 Nute 6 auf, die als Einfach-, Doppel- oder Mehrfachnuten ausgeführt sein können (Fig.3 und 4). Dies kann abhängig sein von der Anzahl der Hebel 4, 5 verteilt über die Höhe an der Mündungsbremse 1.

Fig. 2 zeigt die Funktion der zwei Hebel 4, 5 mit den offenen und den geschlossenen Schenkeln 4.1, 5.1. Beide Hebel 4, 5 sind an sich gegenüberliegenden Seiten in der Mündungsbremse 1 angebracht. Die Mündungsbremse 1 selbst wird entlang der Führung 7 auf das Rohr 2.1 verschoben und in Höhe der Nute 6 bzw. der Ausnehmungen im Rohr 2.1 werden die Hebel 4, 5 verschwenkt. Beim Verschwenken der Hebel 4, 5 werden die Vorsprünge 4.2, 5.2 in die Nute 6 bzw. Ausnehmungen und damit gegen das Waffenrohr 2.1 gedrückt. Dabei werden die Schenkel 4.1, 5.1 gegen einander gedrückt, wodurch die Schenkel 4.1, 5.1 das Waffenrohr 2.1 umschließen. Zur Unterstützung der aufzubringenden Flächenpressung und zur Vermeidung eines sich unabsichtlichen Öffnens greifen die Schenkel 4.1, 5.1 mit ihren Nasen 4.3, 5.3 jeweils an die Umfangsfläche 5.4, 4.4 des gegenüberliegenden Hebels 4, 5 ein/an.

Es versteht sich, dass die Erfindung nicht auf das aufgezeigte Ausführungsbeispiel beschränkt ist. Die Vorrichtung 3 ist überall dort verwendbar, wo wenigstens zweit Teile (1, 2) miteinander verbunden bzw. aneinander befestigt werden sollen. So ist es denkbar, die Vorrichtung auch zwischen zwei Kabel führenden Rohren einzubinden.

Zudem kann der Körper 2 unterschiedliche Geometrien 2a bis 2d aufweisen und auch als drei- und mehreckige Voll- oder Hohlkörper ausgestaltet sein, wobei das zu befestigende Teil dann eine selbige Geometrie als Hohlform aufweist. Entsprechend sind die Schenkel der Hebel auszuführen. Dabei kann vorgesehen werden, umfangsseitig mehr als nur zwei Hebel zu verwenden.

## Patentansprüche

1. Vorrichtung zur Befestigung eines auf bzw. an einem Körper (2, 2.1) zu befestigenden Teils (1), **gekennzeichnet durch**
- wenigstens zwei Hebel (4, 5) mit Schenkeln (4.1, 5.1), wobei
- die Hebel (4, 5) im zu befestigenden Teil (1) drehbar gelagert sind,
- die Hebel (4, 5) um den Lagerpunkt (D) herum einen Vorsprung (4.2, 5.2) aufweisen, welcher
- beim Verschwenken der Hebel (4, 5) gegen den Körper (2, 2.1) gedrückt werden, wodurch das zu befestigende Teil (1) am Körper (2, 2.1) befestigt ist.

2. Vorrichtung nach Anspruch 1, **dadurch gekennzeichnet, dass** der Körper (2, 2.1) Nute (6) oder Ausnehmungen aufweist, in welche die Vorsprünge (4.2, 5.2) verschwenkt werden und in diese hinein ragen.

3. Vorrichtung nach Anspruch 2, **dadurch gekennzeichnet, dass** die Vorsprünge (4.2, 5.2) an den Körper (2, 21.) angreifen.

4. Vorrichtung nach einem der Ansprüche 1 bis 3, **dadurch gekennzeichnet, dass** am Hebel (4, 5), dem Vorsprung (4.2, 5.2) annähernd gegenüberliegend eine Umfangsfläche (4.4, 5.4) vorgesehen ist, an die am Ende der Schenkel (4.1, 5.1) befindliche Nasen (4.3, 5.3) des kooperierenden Hebels (4, 5) einrastbar sind.

5. Vorrichtung nach einem der Ansprüche 1 bis 4, **dadurch gekennzeichnet, dass** am bzw. im Körper (2, 2.1) eine Führung (7) vorgesehen ist, die mit einem Führungsstift (8) des zu befestigenden Teils (1) funktional zusammen wirkt.

6. Vorrichtung nach einem der vorgenannten Ansprüche 2 bis 5, **dadurch gekennzeichnet, dass** je nach Anzahl der Hebel (4, 5) verteilt über die Höhe des zu befestigenden Teils (1) die Nute (6) am Körper (2, 21.) als Einfach-, Doppel- oder Mehrfachnuten ausgeführt sein können.

7. Vorrichtung nach einem der Ansprüche, **dadurch gekennzeichnet, dass** der Körper (2) ein Hohlkörper oder ein Vollkörper mit unterschiedlichen Grundgeometrien rund als auch mehreckig sein kann.

8. Vorrichtung nach einem der vorgenannten Ansprüche, **dadurch gekennzeichnet, dass** das zu befestigende Teil (1) eine Mündungsbremse und der Körper (2.1) ein Waffenrohr sind.
